# EUROPEAN PATENT SPECIFICATION

(11) **EP 2 521 099 B1**
(45) Date of publication and mention of the grant of the patent: **12.07.2017**
(21) Application number: 12166331.4
(22) Date of filing: 02.05.2012
(51) Int. Cl.: G07C 9/00, G08C 17/06, G06K 19/077, H04L 9/32, H04W 12/06

(54) **Communications apparatus and method therefor**
Kommunikationsgerät und Kommunikationsverfahren dafür
Appareil de communication et procéde associé

(30) Priority: 05.05.2011 US 201113101658
(43) Date of publication of application: 07.11.2012
(73) Proprietor: NXP B.V., 5656 AG Eindhoven (NL)
(72) Inventor: Nowottnick, Jürgen, Redhill, Surrey RH1 1NY (GB)
(74) Representative: Hardingham, Christopher Mark

(56) References cited:
- EP-A1- 1 239 420
- EP-A2- 1 013 517
- WO-A1-00/15931
- WO-A1-2005/006261
- WO-A1-2007/096304
- DE-A1- 19 701 740

## Description

### Field

Aspects of various embodiments of the present invention are directed to wireless communications, and in particular to capacitive communications including data communications for activating a vehicle circuit.

### Background

Many wireless communications systems employ transponders and base stations that communicate with one another. For example, transponders can be used in automotive applications for passive keyless entry (PKE) for activating an unlocking mechanism to unlock the doors of a vehicle, or passive keyless go (PKG) for activating an ignition circuit for starting an engine in the vehicle. Generally, transponders communicate with a base station to unlock doors and/or an automobile ignition, or otherwise activate related circuits.

Unfortunately, such communications systems may require complexity and power usage that can be undesirable for a variety of applications. For example, many systems require additional or dedicated switches or sensors to facilitate communications, system wake-up or other operational aspects. Separate circuits may be required to generate sufficient voltage to operate communications circuitry. Further, separate/additional cables and other communications links may be required to facilitate such operation.
German patent application publication number DE 197 01 740 A1 discloses an equipment for activating an authorisation system, comprising a control device, a UHF transmitter/receiver for communicating with at least one base station, and a coding/decoding device, each operation of which is done using a key-code.
International patent application publication number WO 2007/096304 discloses a switching device, for keyless activation or deactivation of a consumer, especially an engine or the like in a vehicle, in which an electrode transmits data to a mobile ID transmitter and allows data being transmitted via a capacitive coupling.

These and other matters have presented challenges to the design and implementation of communications systems for a variety of applications.

Various example embodiments are directed to capacitive communications circuits and their implementation.

### Summary

According to an example embodiment, a communications apparatus includes a controller and first and second communications circuits. The first communications circuit includes a first capacitor electrode that establishes a capacitive electric field with a second capacitor electrode for capacitively coupling signals between the capacitor electrodes, and a modulation circuit configured to modulate signals communicated via the capacitor electrodes. The controller controls the modulation circuit and the first capacitor electrode to communicate a pulsed wake-up signal between a base station and a remote transponder via the electric field, to activate a circuit in the remote transponder. The second communications circuit communicates a wake-up response signal between the remote transponder and the base station over a wireless channel, in response to which the controller further controls the modulation circuit and first capacitor electrode to communicate an authentication signal between the base station and the remote transponder via the electric field. The second communications circuit also communicates an authentication response signal between the remote transponder and the base station over a wireless channel. In these and other contexts, such control or other effecting of communications may include one or both of transmitting a signal and receiving a signal.

Another example embodiment is directed to a communications method. A modulation circuit and a first capacitor electrode are controlled to establish a capacitive electric field between the first capacitor electrode and a second capacitor electrode. This field is used to communicate a pulsed wake-up signal between a base station and a remote transponder to activate a circuit in the remote transponder, and to communicate an authentication signal between the base station and the remote transponder via the electric field, in response to a wake-up response signal generated at the remote transponder. The wake-up response signal is also communicated between the remote transponder and the base station over a wireless channel, and an authentication response signal is further communicated between the remote transponder and the base station over a wireless channel.

Another example embodiment is directed to a vehicle activation system including a vehicle base station having a first capacitor electrode and a base station controller. The base station controller generates a capacitive wake-up signal at a polling interval, and uses the first capacitor electrode to transmit the generated capacitive wake-up signal over a capacitive electric field established between the first capacitor electrode and a second capacitor electrode at a remote transponder. In response to receiving a wake-up response signal, the base station controller generates an authentication signal, and uses the first capacitor electrode to transmit the generated authentication signal over a capacitive electric field established between the first and second capacitor electrodes. In response to receiving a vehicle circuit activation signal, the base station controller determines the authenticity of the vehicle circuit activation signal and, in response to the determined authenticity indicating that the vehicle circuit activation signal is authentic, generates an output to activate a circuit in the vehicle.

In a more particular embodiment, the vehicle activation system further includes the remote transponder, which includes the second capacitor electrode and a transponder controller. The transponder enters an active state (e.g., wakes up) in response to receiving the capacitive wake-up signal via the capacitive field at the second capacitor electrode, generates a wake-up response signal at the transponder controller, and transmits the wake-up response signal to the base station. The transponder further responds to receiving the authentication signal via the capacitive field at the second capacitor electrode, by generating a vehicle circuit activation signal at the controller, and transmitting the vehicle circuit activation signal to the base station.

The above discussion/summary is not intended to describe each embodiment or every implementation of the present disclosure. The figures and detailed description that follow also exemplify various embodiments.

### Brief Description of the Drawings

Various example embodiments may be more completely understood in consideration of the following detailed description in connection with the accompanying drawings, in which:
FIG. 1 shows a capacitive communications system with a separate base station and transponders, in accordance with one or more example embodiments of the present invention;
FIG. 2 shows a wireless automotive system for passive system activation, in accordance with another example embodiment of the present invention; and
FIG. 3 shows a system and related data flow for base station-transponder communications, in accordance with another example embodiment of the present invention.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention including aspects defined in the claims. In addition, the term "example" as used throughout this application is only by way of illustration, and not limitation.

Aspects of the present invention are believed to be applicable to a variety of different types of devices, systems and arrangements involving transponder-base station communications, including those involving automotive applications for operating/activating one or more systems in the automobile. While the present invention is not necessarily so limited, various aspects of the invention may be appreciated through a discussion of examples using this context.

### Detailed Description

Various example embodiments are directed to communications circuits, systems and methods that address challenges, such as those identified in the background above. In accordance with one or more embodiments, capacitive communications circuits are used to communicate between a transponder and base station respectively having capacitor electrodes corresponding to plates of a capacitor, and with a capacitor dielectric (*e.g.,* air) between the electrodes. The communications are effected for initiation (*e.g*., wake-up of the transponder) and, in some implementations, for additional communication between the base station and the transponder. Such applications may, for example, be implemented with passive keyless entry (PKE) or passive keyless go (PKG) applications in the automotive realm.

In a more particular example embodiment, capacitive communications are used in connection with the communication of information between a vehicle base station and a transponder. When a transponder is in proximity of the vehicle in which the vehicle base station (and a corresponding capacitor electrode) resides, the vehicle base station passes a capacitive polling signal to the transponder to wake-up the transponder and cause the transponder to enter an active state. The transponder responds to the signals by providing an acknowledgement signal that is detected by the base station. The base station then enters a communications mode, in which further communications are effected with the transponder to authenticate the transponder. When a transponder is authenticated, the base station generates a signal for activating (*e.g*., operating/energizing) a circuit in the vehicle, such as for unlocking a door in a PKE application, or starting the vehicle's engine in a PKG application.

In some implementations, a capacitive communications circuit in a vehicle base station operates in a self-polling mode in which a pulsed capacitive wake-up signal is generated on an interval (*e.g*., for 10ms every 100ms). This signal generation can be effected using a relatively low current at high voltage, which can be implemented using high voltage processes such as advanced bipolar CMOS-DMOS (ABCD) processes. In various implementations, a capacitive circuit implemented for generating capacitive wake-up communications via the base station is used to mitigate the need for a separate sensor, sensor cable or transmitter coil for wake-up type operations (*e.g*., in a vehicle door or near a vehicle ignition point). In some implementations, at least a portion of such a capacitive circuit is integrated with a base station, and in certain implementations, a capacitor electrode (for the capacitive circuit) is located near a vehicle entry or ignition point and connected to the base station. By driving capacitive communications using a high-voltage driver circuit, an appropriate (*e.g*., resonant) voltage can be achieved with communications effected with low current usage.

After the capacitive wake-up signal is received at the transponder, the transponder responds to the base station in acknowledgement. The acknowledgement may, for example, be carried out using a different communications standard such as communications using the UHF protocol, or using similar or the same capacitive communications. The acknowledgement is received by a receiver at the base station (*e.g.,* a UHF receiver for use with transponders employing UHF communications for acknowledgement). This receiver may, for example, also implement a self-polling approach as with the capacitive circuit (*e.g.,* poll for 10ms of every 100ms).

In another example embodiment, communications between a base station and a remote transponder are effected as follows. A modulation circuit and a first capacitor electrode are controlled to establish a capacitive electric field between the first capacitor electrode and a second capacitor electrode. This control may, for example, involve providing an input to a transmitter circuit including a modulator and capacitor electrode to transmit a capacitive signal, or coupling an output from a receiver circuit including a capacitor and a demodulator for receiving a modulated capacitive signal.

The capacitive electric field is established and operated to communicate a pulsed wake-up signal between a base station and a remote transponder, to activate a circuit in the remote transponder. This activation may involve, for example, a base station-side generation and transmission of a capacitive signal that causes a transponder receiving the signal to switch between a low-power state and an active state (*e.g.,* to "wake up" from a low-power state and enter an active state). A wake-up response signal, generated at the transponder after receiving the pulsed wake-up signal, is communicated between the remote transponder and the base station over a wireless channel. This wireless channel may, for example, include (or be) a capacitive channel established via the first and second electrodes and dielectric (e.g., air) therebetween, functioning as a capacitor. The wireless channel may also include (or be) a separate channel, such as a separate similarly-effected capacitive channel or another type of communications channel such as a high frequency (*e.g*., UHF) channel. Further, this wireless channel may be effected via another receiver in a vehicle coupled to the base station, such as a receiver that is used to communicate UHF signals for other purposes.

In response to the wake-up response signal, an authentication signal is communicated between the base station and the remote transponder via the electric field. This communication may also take place via the capacitive link established between the first and second capacitor electrodes, or via another communications channel such as described above. This authentication signal is used (*e.g*., responded to) by communicating an authentication response signal between the remote transponder and the base station over a wireless channel.

In further implementations, the authentication response signal is authenticated (e.g., evaluated for authenticity/correspondence to a system in which the transponder is used), and an output is generated to activate a circuit in a vehicle based on the authentication. This step can be used, for example, to energize a PKE circuit to unlock one or more doors, a trunk, a steering lock (*e.g.,* for a motorcycle) or other vehicle-type access circuit. This step can also be used, separately or in addition to energizing a PKE circuit, to energize a PKG type of circuit for operating a vehicle engine or other driving components (*e.g*., battery drives for electric vehicles, steering, braking or other components). Energizing a PKG type of circuit may, for example, involve activating an ignition circuit such that further steps (*e.g.,* the pressing of an ignition button) result in starting of a vehicle engine.

In various embodiments as described herein, the communication of information may be effected in an embodiment involving a base station communications circuit, a transponder communications circuit, or both. In this context, various embodiments are directed to one side of communications and corresponding circuitry and/or methods applicable thereto. Base stations, transponders, and other types of communications circuits are therefore amenable to operation in accordance with one or more embodiments as discussed herein.

Another example embodiment is directed to a communications apparatus (*e.g*., circuit or circuits) that operates in a manner such as one or more of those described above, for capacitively communicating (via electrodes effecting a capacitor) wake-up or other sequences, such as may be implemented for a vehicle activation type of circuit. The communications apparatus includes first and second communications circuits, and a controller. The first communications circuit includes a first capacitor electrode that establishes a capacitive electric field with a second capacitor electrode for capacitively coupling signals between the capacitor electrodes, and a modulation circuit configured to modulate signals communicated via the capacitor electrodes.

To initiate a wake-up sequence, the controller controls the modulation circuit and the first capacitor electrode to communicate a pulsed wake-up signal between a base station and a remote transponder via the electric field, to activate a circuit in the remote transponder. In various embodiments, this pulsed communication is carried out on a polling cycle that is limited in time to conserve energy. For example, the pulsed wake-up signal may be communicated at intervals over repeating time periods in which the signal is communicated over about 10% of the cycle. Using this approach, and further using capacitive (*e.g*., high voltage, low current) signal generation, the presence of transponders can be detected via polling while using limited energy. Accordingly, the polling is carried out on a regular basis, for detecting the presence of a remote transponder (*e.g*., detecting a user approaching a vehicle).

The polling can be discontinued, for example, when a system such as a vehicle has been activated. For example, where the circuits are used to facilitate entry to or engine/drive system ignition for the vehicle, the polling can be discontinued once entry has been granted and vehicle locks have not been re-engaged in a non-operating state. As another example, the polling can be discontinued under conditions in which the vehicle ignition is on (*e.g.,* the vehicle's engine is running).

A second communications circuit communicates a wake-up response signal between the remote transponder and the base station over a wireless channel, in response to the pulsed wake-up signal being received at the remote transponder. The wireless channel may, for example, be implemented as discussed above using one or more communication approaches, such as using a capacitive channel (and the same or different capacitor electrodes), or another type of channel such as a UHF channel.

The first communications circuit further communicates an authentication signal between the base station and the remote transponder via the electric field, with the signal being responsive to a wake-up response signal generated at the remote transponder. In this context, the communication is responsive to the wake-up response signal in either being generated by the controller for transmission via the first electrode, or being received at the first electrode as facilitated by the controller.

The second communications circuit correspondingly communicates an authentication response signal between the remote transponder and the base station over a wireless channel (e.g., capacitive or high frequency). This authentication response signal can be used to activate, energize, or operate a vehicle circuit such as a PKE or PKG circuit as discussed above.

The first capacitor electrode may, for example, be located at a base station that generates a signal for the capacitive electric field, or at a transponder that receives such a generated signal. Depending upon the location thereof, communications control for transmitting and receiving are effected accordingly. Various examples discussed as follows (and/or elsewhere herein) characterize aspects related to these and other applications of the aforesaid communications approaches and apparatuses.

In one implementation, the second communications circuit includes the capacitor electrodes, modulation circuit and controller. The controller controls the first capacitor electrode to communicate the wake-up response signal and the authentication response signal via modulation of the established capacitive electric field. Accordingly, all signals may be communicated over a common, or shared, capacitive communications link.

In another implementation, the base station includes the controller and the first and second communications circuits. The controller communicates the pulsed wake-up signal by generating the wake-up signal and using the first communications circuit to transmit the generated wake-up signal from the base station via the capacitive electric field. The controller communicates the wake-up response signal by using the second communications circuit to receive the wake-up response signal as transmitted by the remote transponder, generates the authentication signal in response to the received wake-up response signal, and communicates the authentication signal using the first communications circuit to transmit the generated authentication signal from the base station to the remote transponder via the capacitive electric field. The controller further communicates the authentication response signal by using the second communications circuit to receive the authentication response signal as transmitted by the remote transponder.

In another circuit implementation, the remote transponder includes the controller and the first and second communications circuits. The controller communicates the pulsed wake-up signal by using the first communications circuit to receive the wake-up signal as transmitted by the base station via the capacitive electric field, and also communicates the authentication signal by using the first communications circuit to receive the authentication signal as transmitted by the base station via the capacitive electric field. The controller also communicates the wake-up response signal by generating the wake-up response signal in response to receiving the wake-up signal, and by using the second communications circuit to transmit the wake-up response signal to the base station. The controller further communicates the authentication response signal by generating the authentication response signal in response to the received authentication signal, and by using the second communications circuit to transmit the generated authentication response signal to the base station.

In some embodiments, the base station further includes a vehicle activation circuit that activates a vehicle system as described herein. For example, the authentication response signal can be used to activate a system, such as a PKE or PKG system. This may be carried out, for example, using one or more approaches as described in the references cited below (*e.g.,* to ensure that a signal received from a transponder has an appropriate authentication for the particular vehicle/system being activated).

Various embodiments of the present invention can be applied to a multitude of different applications. As consistent with the discussion herein, one or more embodiments may be implemented with a variety of different types of passive keyless entry or passive keyless go systems. For example, methods, systems, base stations or transponders as discussed herein may be implemented in connection with components and/or all of a capacitive communications system such as described in U.S. Patent Publication No. 2006/234,775, or transponder systems such as described in U.S. Patent Publication No. 2008/0024322, or in U.S. Patent No. 7,426,275, which are fully incorporated herein by reference.

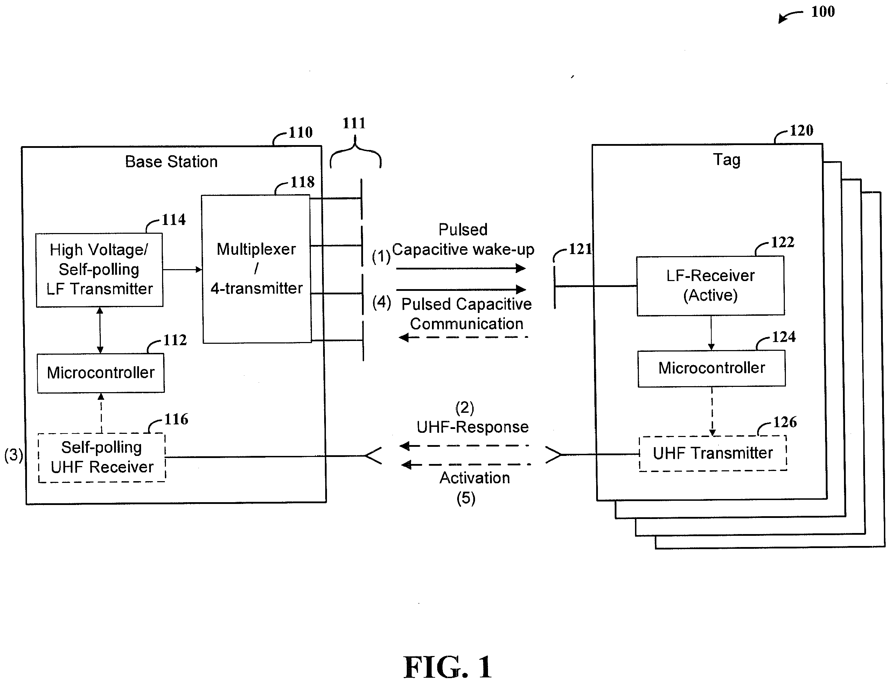

Turning now to the figures, Figure 1 shows a capacitive communications system 100 with a separate base station and transponders, for implementation in authentication (*e.g*., for vehicle circuit activation), in accordance with one or more example embodiments of the present invention. The system 100 includes one or both of a base station 110 and a transponder tag 120, with multiple such tags being applicable for implementations in connection with various example embodiments. Accordingly, the following discussion incorporates aspects of both the base station 110 and the transponder tag 120, with the understanding that various example embodiments are directed to a base station as may be implemented with the base station, other example embodiments are directed to a tag as may be implemented with the transponder tag, and still other example embodiments are directed to a system including both the base station and the transponder tag.

Beginning with the base station 110, a microcontroller 112 controls a high voltage, low frequency transmitter circuit 114 (*e.g.,* a self-polling LF transmitter) to transmit a capacitive signal via one or more capacitor electrodes 111. While four electrodes are shown by way of example (*e.g*., with circuit 118 coupling to the four transmitter electrodes), any number of such electrodes may be implemented to suit particular embodiments. In some embodiments, the circuit 118 is a multiplexing circuit configured to multiplex signals, and can be implemented with fewer (or even one) capacitor electrodes. Where multiple electrodes are used, different signals can be communicated via each electrode.

To facilitate communications with a remote transponder (such as tag 120), the base station microcontroller 112 generates a capacitive wake-up signal at a polling interval, and transmits the generated capacitive wake-up signal over a capacitive electric field established between the capacitor electrode(s) 111 and another capacitor electrode, such as electrode 121 of tag 120. The controller is further responsive to a received wake-up response signal, to generate an authentication signal and transmit the generated authentication signal over a capacitive electric field established between the capacitor electrode(s) 111 and the other electrode (e.g., 121).

The wake-up response signal may, for example, be received via the capacitor electrode(s) 111, or via another circuit such as a self-polling UHF receiver 116. The base station 110 (*e.g.,* via microcontroller 112) is responsive to further receiving a vehicle circuit activation signal by determining the authenticity of the vehicle circuit activation signal, and by generating an output to activate a vehicle circuit such as a PKE or PKG circuit. This vehicle circuit activation signal may, for example, be received via the capacitor electrode(s) 111 (and a capacitive signal), or another receiver such as the UHF receiver 116.

The transponder tag 120 includes, as discussed above, a capacitor electrode 121 that receives capacitive signals from another electrode, such as electrode(s) 111, with each electrode acting as an electrode of a capacitor and with air (or other material) therebetween acting as a capacitor dielectric. The transponder tag 120 also includes a low-frequency receiver circuit 122 connected to receive capacitive signals via the capacitor electrode 121, a microcontroller 124 and, for embodiments in which high-frequency response communications are implemented, a UHF transmitter 126. Other high frequency transmitters, or transmitters operating on a different principal, are used in place of the UHF transmitter 126 in accordance with various embodiments.

The transponder tag 120 is responsive to receiving a capacitive wake-up signal via a capacitive field (*e.g.,* as generated per the above) at the capacitor electrode 121, by generating (via microcontroller 124) a wake-up response signal. This wake-up response signal is further transmitted (*e.g*., to base station 110) via the low-frequency receiver circuit 122 and capacitor electrode 121, or via the UHF transmitter 126. The transponder tag 120 is further responsive to receiving an authentication signal over a capacitive field presented at the capacitor electrode 121, by generating (*e.g*., at microcontroller 124) a vehicle circuit activation signal, and transmitting the vehicle circuit activation signal via either the low-frequency receiver circuit 122 and capacitor electrode 121, or via the UHF transmitter 126.

In a particular implementation, and as applicable to example embodiments involving the base station 110 alone, the transponder tag 120 alone, or a system/apparatus including the base station and transponder tag, transponder authentication and vehicle circuit activation are carried out as follows and in accordance with the reference step numerals in Figure 1. At step 1, the base station 110 generates a pulsed capacitive wake-up signal and transmits the signal via a capacitive electric field established using the capacitor electrodes 111 and 121 as respective capacitor plates. The transponder tag 120 responds to the pulsed capacitive wake-up signal by entering an active state (*e.g*., from a sleep, or low-power state) and by further generating and transmitting a UHF wake-up response signal at step 2.

The base station 110 receives the UHF wake-up response signal, and initiates an authentication sequence at step 3 to authenticate the transponder tag 120. This authentication sequence involves sending an authentication communication by way of a pulsed capacitive communication via capacitor electrodes 111 and 121 at step 4 (alternate embodiments involve using another communications medium, such as a UHF medium, for this authentication communication). The transponder tag 120 receives the authentication communication and generates a vehicle circuit activation signal at step 5.

The base station 110 receives and uses the vehicle circuit activation signal to activate a vehicle circuit, such as a PKE or PKG circuit. This activation may involve, for example, unlocking an automobile door or trunk, or energizing an engine/drive system ignition circuit so that another input such as the press of a "start" button starts the vehicle's engine/drive system.

The capacitive fields used as discussed herein to wake-up (and, *e.g.,* further communicate with) a transponder is established in one or more of a variety of manners. In some implementations, the transponder tag 120 capacitively couples to a user's body to effect a grounding connection, for the capacitor circuit including the capacitor electrodes 111 and 121. In other implementations, the capacitive connection between the electrodes 111 and 121 is effected via the user's body.

The microcontroller 112 generates the capacitive wake-up signal on an interval as can be set to suit particular applications. For example, to save power, the microcontroller 112 may be programmed to control the low frequency transmitter circuit 114 and transmitter circuit 118 (*e.g.,* at a resonant voltage) to generate a capacitive signal on a polling interval, of which less than half, or less than 10% involves the active generation of a signal.

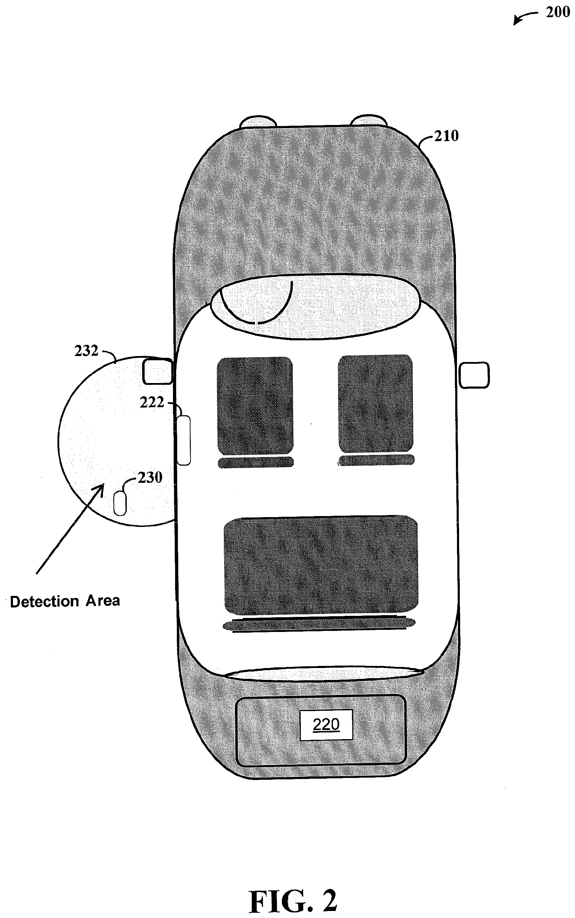

The base stations as discussed herein (*e.g.,* 110 of Figure 1) can be implemented for use in a variety of different types of vehicles, such as an automobile, motorcycle, boat or off-road vehicle. Figure 2 shows one such example, in which a wireless automotive activation system 200 is implemented with an automobile for passive system activation, in accordance with another example embodiment of the present invention. The system 200 includes a base station 220 in a vehicle 210, which operates to communicate with a transponder 230 to effect passive circuit activation, such as for entering the vehicle 210 (PKE) or activating the vehicle's ignition (PKG). The base station 220 includes a housing having a base station controller and a capacitor electrode or electrode contact.

In some implementations, the base station 220 directly capacitively couples with the transponder 230 from a location such as shown (near/in a trunk of the vehicle 210). In other implementations, the base station 220 capacitively couples to the transponder via a remote capacitor electrode 222, which can be considered to be part of the base station 220. In any event, a capacitor circuit is established between the base station 220 and the transponder 230 with a capacitor electrode at each component acting as the electrodes of a capacitor, and with air or other materials between the capacitor electrodes acting as a capacitor dielectric. The proximity of the respective capacitor electrodes is such that the field is established, and may, for example, correspond to a range represented by detection area 232.

Of note, the location of the base station 220 and capacitor electrode 222 (when implemented) are modified to suit applications to particular vehicles, and/or are located in different portions of the vehicle 210. For example, the base station 220 may be located near an engine or other drive component of the vehicle 210. Communications can be effected in a manner similar to that described herein, and/or in the patent documents cited herein.

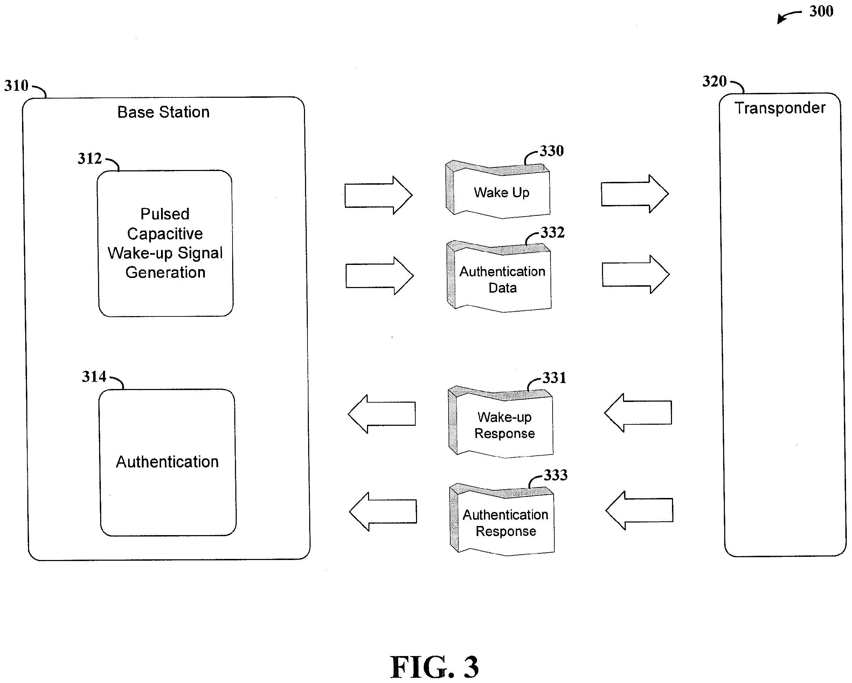

Data communications and flow for effecting passive circuit activation in manners as discussed herein can take many forms. Figure 3 shows a system 300 and related data flow for base station-transponder communications, in accordance with one such form and with another example embodiment of the present invention. The system 300 includes a base station 310 and a transponder 320, which respectively communicate via data flow as shown at blocks 330-333.

Referring to base station 310, pulsed capacitive wake-up generation is carried out at block 312 on a polling interval, which is set to effect such a signal generation on an interval to save power (*e.g.,* to poll 10ms of every 100ms). At these polling intervals, a capacitive wake-up signal is presented at a base station capacitor electrode. When a transponder capacitor electrode is present, this wake-up signal is communicated as data 330 to the transponder, over a capacitive field established between the capacitor electrodes at the base station and the transponder.

Referring to transponder 320, the wake-up signal is received and used to activate the transponder, such as by waking the transponder from a low-power sleep state, to a higher-power, active state. A wake-up response signal is generated at the transponder 320, and communicated via data 331 back to the base station. This data 331 is used at the base station to determine that a transponder is indeed within communication distance (*e.g.,* for establishing a capacitive field). The wake-up response can be communicated using one or more of a variety of approaches, including capacitive and high frequency approaches as discussed herein.

Upon receipt of the wake-up response, the base station enters an authentication type of routine at block 314, via which authentication data 332 is sent to the transponder, and authentication response data 333 is generated at the transponder and returned to the base station 310. Some or all of these communications may be carried out over a capacitive field established between electrodes as discussed above, or another communications link such as a high frequency channel.

Based upon the above discussion and illustrations, those skilled in the art will readily recognize that various modifications and changes may be made to the present invention without strictly following the exemplary embodiments and applications illustrated and described herein. For example, additional inductive circuits can be used to boost a strength of signal (*e.g*., with a capacitive circuit used to carry out wake-up functions). In addition, embodiments described in connection with passive keyless entry (PKE) may be implemented for passive keyless go (PKG) for ignition, as PKG embodiments may be implemented for PKE embodiments. Such modifications do not depart from the true spirit and scope of the present invention, including that set forth in the following claims.

The present disclosure extends to a communications apparatus comprising: a first communications circuit including a first capacitor electrode configured to establish a capacitive electric field with a second capacitor electrode for capacitively coupling signals between the capacitor electrodes, and a modulation circuit configured to modulate signals communicated via the capacitor electrodes; a controller configured to control the modulation circuit and the first capacitor electrode to communicate a pulsed wake-up signal between a base station and a remote transponder via the electric field, to activate a circuit in the remote transponder, and communicate an authentication signal between the base station and the remote transponder via the electric field, responsive to a wake-up response signal generated at the remote transponder; and a second communications circuit configured and arranged to communicate the wake-up response signal between the remote transponder and the base station over a wireless channel, and communicate an authentication response signal between the remote transponder and the base station over a wireless channel.

The second communications circuit may include the capacitor electrodes, modulation circuit and controller, the controller being configured to control the first capacitor electrode to communicate the wake-up response signal and the authentication response signal via modulation of the established capacitive electric field.

The controller and the first and second communications circuits may be part of the base station, and the controller being configures and arranged to communicate the pulsed wake-up signal by generating the wake-up signal and using the first communications circuit to transmit the generated wake-up signal from the base station via the capacitive electric field, communicate the wake-up response signal by using the second communications circuit to receive the wake-up response signal as transmitted by the remote transponder, communicate the authentication signal by generating the authentication signal in response to the received wake-up response signal, and by using the first communications circuit to transmit the generated authentication signal from the base station to the remote transponder via the capacitive electric field, and communicate the authentication response signal by using the second communications circuit to receive the authentication response signal as transmitted by the remote transponder.

The base station may further include a vehicle activation circuit configured and arranged to authenticate the received authentication response signal, and in response to the authentication, generate an output to activate a circuit in the vehicle.

The first and second communications circuits may be part of the remote transponder, the controller being configured and arranged to communicate the pulsed wake-up signal by using the first communications circuit to receive the wake-up signal as transmitted by the base station via the capacitive electric field, communicate the wake-up response signal by generating the wake-up response signal in response to receiving the wake-up signal, and by using the second communications circuit to transmit the wake-up response signal to the base station, communicate the authentication signal by using the first communications circuit to receive the authentication signal as transmitted by the base station via the capacitive electric field, and communicate the authentication response signal by generating the authentication response signal in response to the received authentication signal, and by using the second communications circuit to transmit the generated authentication response signal to the base station.

The second communications circuit may be configured and arranged to communicate the wake-up response signal and the authentication response signal vial modulation of the established capacitive electric field between the first and second capacitor electrodes

Hereinabove is disclosed a system in which wireless communications between a vehicle base station and a transponder are effected. In accordance with one or more example embodiments, a modulation circuit and a first capacitor electrode are used to establish a capacitive electric field between the first capacitor electrode and another capacitor electrode, the respective electrodes and space therebetween (e.g., air) forming a capacitor. A pulsed wake-up signal is communicated between a base station and a remote transponder via the electric field, to activate a circuit in the remote transponder. A wake-up response signal (*i.e.,* generated in response to the wake-up signal) is communicated between the remote transponder and the base station over a wireless channel. An authentication signal is then communicated between the base station and the remote transponder, via the electric field, in response to the wake-up response signal. An authentication response signal is then communicated between the remote transponder and the base station over a wireless channel.

## Claims

1. A vehicle activation system for passive keyless entry applications and comprising:
a vehicle base station (110) including a first capacitor electrode (111) and a base station controller (112), the vehicle base station being configured and arranged to
at the base station controller, generate a capacitive wake-up signal at a polling interval,
transmit the generated capacitive wake-up signal over a capacitive electric field established between the first capacitor electrode and a second capacitor electrode (121),
in response to receiving a wake-up response signal, generate an authentication signal at the base station controller,
transmit the generated authentication signal over a capacitive electric field established between the first and second capacitor electrodes, and
in response to receiving a vehicle circuit activation signal, determine the authenticity of the vehicle circuit activation signal and, in response to the determined authenticity indicating that the vehicle circuit activation signal is authentic, generate an output to activate a circuit in the vehicle.

2. The vehicle activation system of claim 1, further including a transponder (120) including the second capacitor electrode and a transponder controller (124), the transponder being configured and arranged to
in response to receiving the capacitive wake-up signal via the capacitive field at the second capacitor electrode, generate a wake-up response signal at the transponder controller and transmit the wake-up response signal to the base station, and
in response to receiving the authentication signal via the capacitive field at the second capacitor electrode, generate a vehicle circuit activation signal at the controller, and transmit the vehicle circuit activation signal to the base station.

3. The system of claim 2, wherein
each of the base station and the transponder respectively includes a UHF communications circuit (116, 126), and
the base station and transponder are respectively configured to communicate at least one of the wake-up response signal and the vehicle circuit activation signal via the UHF communications link.

4. The system of claim 2 or 3, wherein the transponder is configured to transmit at least one of the wake-up response signal and the vehicle circuit activation signal over the capacitive electric field established between the first capacitor electrode and a second capacitor electrode.

5. The system of any of claims 2 to 4, wherein each of the vehicle base station and the transponder respectively includes an inductive communications circuit configured to communicate the vehicle circuit activation signal from the transponder to the base station.

6. The system of any of claims 2 to 5 , wherein the transponder is configured to capacitively couple to a user's body to effect a grounding connection for the capacitor circuit including the first and second capacitor electrodes.

7. The system of any of claims 2 to 6, wherein the transponder is configured to capacitively couple the second capacitor electrode to the first capacitor electrode via a user's body to receive the capacitive wake-up signal and to receive the authentication signal.

8. The system of any preceding claim, wherein the first capacitor electrode includes an electrode contact in a base station housing including the base station controller, and a remote capacitor plate connected to the electrode contact and located at an entry point in a vehicle that facilitates a proximity between the remote capacitor plate and the second capacitor electrode that effects the capacitive field for a capacitor having the first capacitor electrode and remote capacitor plate as respective plates of the capacitor, the space defined by the proximity between the respective plates being a dielectric of the capacitor.

9. The system of any preceding claim, wherein the vehicle base station is configured to generate the capacitive wake-up signal at a polling interval by generating the capacitive wake-up signal during a period of time that is less than half of a repeated polling time cycle.

10. The system of any preceding claim, wherein the vehicle base station includes a high voltage driver configured to drive a capacitive circuit at a resonant voltage to generate the capacitive wake-up signal.

11. The system of any preceding claim, wherein the first electrode includes at least two electrode circuits respectively configured to communicate separate capacitive pulses to the second electrode.

12. The system of any preceding claim, wherein the vehicle base station includes a multiplexer configured to provide a multiplexed output to the first electrode for communicating capacitive pulses to the second electrode.

13. A communications method implemented in a vehicle activation system for passive keyless entry applications, the method comprising:
controlling a modulation circuit and a first capacitor electrode to establish a capacitive electric field between the first capacitor electrode and a second capacitor electrode, to
communicate a pulsed wake-up signal between a base station and a remote transponder via the electric field, to activate a circuit in the remote transponder, and
communicate an authentication signal between the base station and the remote transponder via the electric field, responsive to a wake-up response signal generated at the remote transponder;
communicating the wake-up response signal between the remote transponder and the base station over a wireless channel; and
communicating an authentication response signal between the remote transponder and the base station over a wireless channel.

14. The method of claim 13, further comprising:
authenticating the received authentication response signal, and
in response to the authentication, generating an output to activate a circuit in a vehicle.

## Patentansprüche

1. Ein Fahrzeug Aktivierungssystem für passive schlüssellose Eingabeanwendungen und aufweisend:
eine Fahrzeug Basisstation (110), welche eine erste Kondensatorelektrode (111) und einen Basisstation Controller (112) enthält, wobei die Fahrzeug Basisstation konfiguriert und eingerichtet ist zum
an dem Basisstation Controller, Erzeugen eines kapazitiven Wecksignals bei einem Abfrageintervall,
Übertragen des erzeugten kapazitiven Wecksignals über ein kapazitives elektrisches Feld, welches zwischen der ersten Kondensatorelektrode und einer zweiten Kondensatorelektrode (121) angelegt ist,
als Reaktion auf ein Empfangen eines Weckreaktionssignals, Erzeugen eines Authentifizierungssignals an dem Basisstation Controller,
Übertragen des erzeugten Authentifizierungssignals über ein kapazitives elektrisches Feld, welches zwischen der ersten und der zweiten Kondensatorelektrode angelegt ist, und
als Reaktion auf ein Empfangen eines Fahrzeugschaltkreis Aktivierungssignals, Bestimmen der Authentizität des Fahrzeugschaltkreis Aktivierungssignals und, als Reaktion auf die bestimmte Authentizität, welche angibt, dass das Fahrzeugschaltkreis Aktivierungssignal authentisch ist, Erzeugen einer Ausgabe zum Aktivieren eines Schaltkreises in dem Fahrzeug.

2. Das Fahrzeug Aktivierungssystem gemäß Anspruch 1, welches ferner einen Transponder (120) enthält, welcher die zweite Kondensatorelektrode und einen Transponder Controller (124) enthält, wobei der Transponder konfiguriert und eingerichtet ist zum
als Reaktion auf ein Empfangen des kapazitiven Wecksignals via das kapazitive Feld an der zweiten Kondensatorelektrode, Erzeugen eines Weckreaktionssignals an dem Transponder Controller und Übertragen des Weckreaktionssignals zu der Basisstation, und
als Reaktion auf ein Empfangen des Authentifizierungssignals via das kapazitive Feld an der zweiten Kondensatorelektrode, Erzeugen eines Fahrzeugschaltkreis Aktivierungssignals bei dem Controller, und Übertragen des Fahrzeugschaltkreis Aktivierungssignals zu der Basisstation.

3. Das System gemäß Anspruch 2, wobei
jedes von der Basisstation und dem Transponder jeweils einen UHF Kommunikationsschaltkreis (116, 126) enthält, und
die Basisstation und der Transponder jeweils konfiguriert sind zum Kommunizieren von zumindest einem von dem Weckreaktionssignal und dem Fahrzeugschaltkreis Aktivierungssignal via die UHF Kommunikationsverbindung.

4. Das System gemäß Anspruch 2 oder 3, wobei der Transponder konfiguriert ist zum Übertragen von zumindest einem von dem Weckreaktionssignal und dem Fahrzeugschaltkreis Aktivierungssignal über das kapazitive elektrische Feld, welches zwischen der ersten Kondensatorelektrode und einer zweiten Kondensatorelektrode angelegt ist.

5. Das System gemäß irgendeinem der Ansprüche 2 bis 4, wobei jedes von der Fahrzeug Basisstation und dem Transponder jeweils einen induktiven Kommunikationsschaltkreis enthält, welcher konfiguriert ist zum Kommunizieren des Fahrzeugschaltkreis Aktivierungssignals von dem Transponder zu der Basisstation.

6. Das System gemäß irgendeinem der Ansprüche 2 bis 5, wobei der Transponder konfiguriert ist zum kapazitiven Koppeln mit einem Körper eines Benutzers, um eine Masseverbindung für den Kondensatorschaltkreis zu bewirken, welcher die erste und die zweite Kondensatorelektrode enthält.

7. Das System gemäß irgendeinem der Ansprüche 2 bis 6, wobei der Transponder konfiguriert ist zum kapazitiven Koppeln der zweiten Kondensatorelektrode mit der ersten Kondensatorelektrode via einen Körper eines Benutzers, zum Empfangen des kapazitiven Wecksignals und zum Empfangen des Authentifizierungssignals.

8. Das System gemäß irgendeinem vorangehenden Anspruch, wobei die erste Kondensatorelektrode enthält
einen Elektrodenkontakt in einem Basisstation Gehäuse, welches den Basisstation Controller enthält, und
eine Remote Kondensatorplatte, welche mit dem Elektrodenkontakt verbunden ist und welche sich bei einem Eingabepunkt in einem Fahrzeug befindet, welcher eine Nähe zwischen der Remote Kondensatorplatte und der zweiten Kondensatorelektrode erleichtert, welche das kapazitive Feld für einen Kondensator bewirkt, welcher die erste Kondensatorelektrode und die Remote Kondensatorplatte als jeweilige Platten des Kondensator hat, wobei ein Raum, welcher mittels der Nähe zwischen den jeweiligen Platten definiert wird, ein Dielektrikum des Kondensator ist.

9. Das System gemäß irgendeinem vorangehenden Anspruch, wobei die Fahrzeug Basisstation konfiguriert ist zum Erzeugen des kapazitiven Wecksignals bei einem Abfrageintervall mittels Erzeugens des kapazitiven Wecksignals während einer Zeitperiode, die kürzer ist als die Hälfte eines wiederholten Abfragezeitzyklus.

10. Das System gemäß irgendeinem vorangehenden Anspruch, wobei die Fahrzeug Basisstation einen Hochspannungstreiber enthält, welcher konfiguriert ist zum Antreiben eines kapazitiven Schaltkreises bei einer Resonanzspannung zum Erzeugen des kapazitiven Wecksignals.

11. Das System gemäß irgendeinem vorangehenden Anspruch, wobei die erste Elektrode zumindest zwei Elektrodenschaltkreise enthält, die jeweils konfiguriert sind zum Kommunizieren von getrennten kapazitiven Impulsen zu der zweiten Elektrode.

12. Das System gemäß irgendeinem vorangehenden Anspruch, wobei die Fahrzeug Basisstation einen Multiplexer enthält, welcher konfiguriert ist zum Bereitstellen einer gemultiplexten Ausgabe zu der ersten Elektrode zum Kommunizieren von kapazitiven Impulsen zu der zweiten Elektrode.

13. Ein Kommunikationsverfahren, welches in einem Fahrzeug Aktivierungssystem für passive schlüssellose Eingabeanwendungen implementiert ist, wobei das Verfahren aufweist:
Steuern eines Modulationsschaltkreises und einer ersten Kondensatorelektrode zum Anlegen eines kapazitiven elektrischen Felds zwischen der ersten Kondensatorelektrode und einer zweiten Kondensatorelektrode zum
Kommunizieren eines gepulsten Wecksignals zwischen einer Basisstation und einem Remote Transponder via das elektrische Feld, zum Aktivieren eines Schaltkreises in dem Remote Transponder, und
Kommunizieren eines Authentifizierungssignals zwischen der Basisstation und dem Remote Transponder via das elektrische Feld, als Reaktion auf ein Weckreaktionssignal, welches bei dem Remote Transponder erzeugt wird;
Kommunizieren des Weckreaktionssignals zwischen dem Remote Transponder und der Basisstation über einen drahtlosen Kanal; und
Kommunizieren eines Authentifizierungsreaktionssignals zwischen dem Remote Transponder und der Basisstation über einen drahtlosen Kanal.

14. Das Verfahren gemäß Anspruch 13, ferner aufweisend:
Authentifizieren des empfangenen Authentifizierungsreaktionssignals, und
als Reaktion auf das Authentifizieren, Erzeugen einer Ausgabe zum Aktivieren eines Schaltkreises in einem Fahrzeug.

## Revendications

1. Système d'activation de véhicule pour applications d'entrée passive sans clé et comprenant :
une station de base de véhicule (110) comportant une première électrode de condensateur (111) et un contrôleur de station de base (112), la station de base de véhicule étant configurée et agencée pour :
au niveau du contrôleur de station de base, générer un signal de réveil capacitif à un intervalle de sondage,
transmettre le signal de réveil capacitif généré sur un champ électrique établi entre la première électrode de condensateur et une seconde électrode de condensateur (121),
en réponse à la réception d'un signal de réponse de réveil, générer un signal d'authentification au niveau du contrôleur de station de base,
transmettre le signal d'authentification généré sur un champ électrique capacitif établi entre les première et seconde électrodes de condensateur, et
en réponse à la réception d'un signal d'activation de circuit de véhicule, déterminer l'authenticité du signal d'activation de circuit de véhicule et, en réponse à l'authenticité déterminée indiquant que le signal d'activation de circuit de véhicule est authentique, générer une sortie pour activer un circuit dans le véhicule.

2. Système d'activation de véhicule selon la revendication 1, comportant en outre un transpondeur (120) comportant la seconde électrode de condensateur et un contrôleur de transpondeur (124), le transpondeur étant configuré et agencé pour :
en réponse à la réception du signal de réveil capacitif par l'intermédiaire du champ capacitif au niveau de la seconde électrode de condensateur, générer un signal de réponse de réveil au niveau du contrôleur de transpondeur et transmettre le signal de réponse de réveil à la station de base, et
en réponse à la réception du signal d'authentification par l'intermédiaire du champ capacitif au niveau de la seconde électrode de condensateur, générer un signal d'activation de circuit de véhicule au niveau du contrôleur, et transmettre le signal d'activation de circuit de véhicule à la station de base.

3. Système selon la revendication 2, dans lequel
chacun de la station de base et du transpondeur comporte respectivement un circuit de communications UHF (116, 126), et
la station de base et le transpondeur sont configurés respectivement pour communiquer au moins l'un du signal de réponse de réveil et du signal d'activation de circuit de véhicule par l'intermédiaire de la liaison de communications UHF.

4. Système selon la revendication 2 ou 3, dans lequel le transpondeur est configuré pour transmettre au moins l'un du signal de réponse de réveil et du signal d'activation de circuit de véhicule sur le champ électrique capacitif établi entre la première électrode de condensateur et une seconde électrode de condensateur.

5. Système selon l'une quelconque des revendications 2 à 4, dans lequel chacun de la station de base de véhicule et du transpondeur comporte respectivement un circuit de communications inductif configuré pour communiquer le signal d'activation de circuit de véhicule du transpondeur à la station de base.

6. Système selon l'une quelconque des revendications 2 à 5, dans lequel le transpondeur est configuré pour se coupler capacitivement au corps d'un utilisateur pour effectuer une connexion à la masse du circuit condensateur comportant les première et seconde électrodes de condensateur.

7. Système selon l'une quelconque des revendications 2 à 6, dans lequel le transpondeur est configuré pour coupler capacitivement la seconde électrode de condensateur à la première électrode de condensateur par l'intermédiaire du corps d'un utilisateur pour recevoir le signal de réveil capacitif et recevoir le signal d'authentification.

8. Système selon l'une quelconque des revendications précédentes, dans lequel la première électrode de condensateur comporte un contact d'électrode dans un logement de station de base comportant le contrôleur de station de base, et une plaque de condensateur distante connectée au contact d'électrode et située à un point d'entrée dans un véhicule qui facilite une proximité entre la plaque de condensateur distante et la seconde électrode de condensateur qui effectue le champ capacitif pour un condensateur ayant la première électrode de condensateur et la plaque de condensateur distante comme plaque respective du condensateur, l'espace défini par la proximité entre les plaques respectives étant un diélectrique du condensateur.

9. Système selon l'une quelconque des revendications précédentes, dans lequel la station de base de véhicule est configurée pour générer le signal de réveil capacitif à un intervalle de sondage en générant le signal de réveil capacitif durant une période de temps inférieure à la moitié d'un cycle répété de temps de sondage.

10. Système selon l'une quelconque des revendications précédentes, dans lequel la station de base de véhicule comporte un circuit de commande haute tension configuré pour commander un circuit capacitif à une tension résonnante pour générer le signal de réveil capacitif.

11. Système selon l'une quelconque des revendications précédentes, dans lequel la première électrode comporte au moins deux circuits d'électrode configurés respectivement pour communiquer des impulsions capacitives séparées à la seconde électrode.

12. Système selon l'une quelconque des revendications précédentes, dans lequel la station de base de véhicule comporte un multiplexeur configuré pour fournir une sortie multiplexée à la première électrode afin de communiquer des impulsions capacitives à la seconde électrode.

13. Procédé de communications mis en oeuvre dans un système d'activation de véhicule pour applications d'entrée passive sans clé, le procédé comprenant :
la commande d'un circuit de modulation et d'une première électrode de condensateur pour établir un champ électrique capacitif entre la première électrode de condensateur et une seconde électrode de condensateur, pour
communiquer un signal de réveil pulsé entre une station de base et un transpondeur distant par l'intermédiaire du champ électrique, pour activer un circuit dans le transpondeur distant, et
communiquer un signal d'authentification entre la station de base et le transpondeur distant par l'intermédiaire du champ électrique, en réponse à un signal de réponse de réveil généré au niveau du transpondeur distant ;
la communication du signal de réponse de réveil entre le transpondeur distant et la station de base sur un canal sans fil ; et
la communication d'un signal de réponse d'authentification entre le transpondeur distant et la station de base sur un canal sans fil.

14. Procédé selon la revendication 13, comprenant en outre :
l'authentification du signal de réponse d'authentification reçu, et
en réponse à l'authentification, la génération d'une sortie pour activer un circuit dans un véhicule.
